# EUROPEAN PATENT APPLICATION

(11) **EP 2 207 279 A1**
(43) Date of publication of application: **14.07.2010**
(21) Application number: 09290001.8
(22) Date of filing: 05.01.2009
(51) Int. Cl.: H04B 7/26, H04W 56/00

(54) **Method for transmitting uplink data in a communications system**

(71) Applicant: Alcatel Lucent, 75008 Paris (FR)
(72) Inventor: Cesar, Bozo, 70439 Stuttgart (DE); Schaepperle, Joerg, 70180 Stuttgart (DE); Otterbach, Juergen, 70499 Stuttgart (DE)
(74) Representative: Kohler Schmid Möbus

(57) **Abstract**

The invention relates to a method for transmitting an uplink data signal (7), in particular comprising ranging data (R), from a mobile station (MS3) to a base station (BS) of a communication cell of a wireless communications system, in particular of a WiMAX system, the method comprising: synchronizing the transmission of the uplink data signal (7) with the transmission of a downlink sub-frame (4a) transmitted from the base station (BS) to the mobile station (MS3) by using a common signal (8), in particular a common trigger signal, of a global positioning system which is received by both the base station (BS) and the mobile station (MS1 to MS3). The method may further include: in the mobile station (MS1 to MS3), determining a propagation delay (RTD / 2) between the common trigger signal (8) and the start of the reception of the downlink sub-frame (4a), and calculating a delay correction value (RTD) for delaying the transmission of the uplink data signal (7) based on the determined propagation delay (RTD / 2). The invention also relates to a computer program product for implementing the method, to a communications cell, to a communications system, and to a TDD frame structure (4).

## Description

### Background of the Invention

The invention relates to a method for transmitting an uplink data signal, in particular comprising ranging data, from a mobile station to a base station of a communication cell of a wireless communications system, and to a computer program product for implementing the method. The invention also relates to a communications cell for such a communications system, comprising: a base station adapted to receive a signal, in particular a trigger signal, from a global positioning system for triggering the transmission of a downlink sub-frame, and at least one mobile station adapted to transmit an uplink data signal to the base station. The invention also relates to a communications system comprising at least one such communications cell, and to a Time Division Duplex, TDD, frame structure for a communications system, comprising an uplink sub-frame to be transmitted from a mobile station to a base station of a communications cell, the uplink sub-frame comprising a ranging area reserved for ranging data and a subsequent user data area reserved for user data.

A communications cell in a wireless communications system, in particular in a WiMAX (Worldwide interoperability for Microwave Access) communications system comprises a base station and a number of terminal devices, also referred to as mobile stations. These systems are commonly operated in Time Division Duplex, TDD, such that the same data channel is used for uplink signals, i.e. signals transmitted from the mobile stations to the base station (in an uplink sub-frame), and for downlink signals, i.e. for signals transmitted from the base station to the mobile stations (in a downlink sub-frame). However, it will be understood that it is also possible to use frequency division duplex, FDD, for the communication between the base station and the mobile stations, in which case different channels are used for the uplink and downlink signals.

In a TDD or FDD transmission scheme, uplink signals are required to arrive at the base station in a predefined time grid to avoid overlap with uplink signals from other mobile stations. Moreover, the uplink signals should be received in the base station within a predefined power range to enable the base station to decode / process the uplink signal.

When a mobile station is switched on in a communications cell, the mobile station neither knows the propagation delay of the downlink signal from the base station to the mobile station nor the propagation delay from the mobile station to the base station. Thus, when starting the transmission, the mobile station does not know how to delay its uplink data signal in order to ensure that the latter arrives at the base station in the desired time interval (time slot). Moreover, the mobile station does not know how big the attenuation of the signals (path loss) is, and consequently cannot estimate the transmit power it has to use so that the uplink signal arrives at the base station within the predefined power range.

For solving these problems, in the current IEEE802.16e and WiMAX standards a ranging procedure is performed when a mobile station is switched on in order to perform power and delay adjustment. For this purpose, a ranging area has to be reserved in an uplink sub-frame of a TDD frame so that the mobile station can transmit the first signals (comprising ranging data, typically being using a specific Code Division Multiple Access (CDMA) code) to the base station without disturbing data signals being transmitted from other mobile stations to the base station. The initial ranging area has to be so large that the ranging signals do not overwrite the succeeding data area. In order to achieve this, the ranging area has to be chosen larger than the time interval in which ranging data is actually transmitted, i.e. a so-called guard time interval is required the length of which roughly corresponds to the round trip delay (RTD) of a signal which is transmitted between the base station and the mobile station having the largest distance from the base station within the communications cell.

Moreover, the mobile station starts transmitting the initial ranging data signal with low transmit power and slowly increases the transmit power until the base station can decode the signal and respond with a control message which contains correction values for the transmit power and the transmit delay. In one or more subsequent steps the mobile station transmits additional (periodic) ranging signals for performing the fine tuning. However, especially in large cell deployments, radio resources are wasted when performing the ranging procedure and also a high processing power of the base station is required for detecting unsynchronized signals during the initial ranging process.

### Object of the Invention

It is the object of the invention to further develop a method, a computer program product for implementing the method, a communications cell, a communications system and a TDD frame structure of the type described in the introduction to reduce the radio resource consumption and preferably the time duration of the ranging process.

### Summary of the Invention

According to a first aspect, this object is met by a method as described above, the method comprising: synchronizing the transmission of the uplink data signal with the transmission of a downlink sub-frame, in particular a Time Division Duplex, TDD, downlink sub-frame, transmitted from the base station to the mobile station by using a common signal, in particular a common trigger signal, of a global positioning system which is received by both the base station and the mobile station.

By receiving the same signal in both the base station and the mobile station, it is possible to synchronize the uplink and downlink signals in the TDD or FDD duplex operation. Using a trigger signal of a global positioning system is particularly advantageous, as the signal can be received in both the base station and the mobile station concurrently, i.e. without a propagation delay, thus providing a common time standard to the base station and the mobile station.

In one variant, the method further comprises: determining a propagation delay between the common trigger signal and the start of the reception of the downlink sub-frame in the mobile station, and calculating a delay correction value for delaying the transmission of the uplink data signal based on the determined propagation delay.

The inventors propose to synchronize the initial uplink signals during network entry to a common synchronization signal by the following process: The mobile station receives the signal of the global positioning system, thus knowing the frame start trigger of the base station for starting the transmission of the downlink signal. Thus, when the mobile station receives the downlink frame, it can measure the propagation delay for the transmission between the base station and the mobile station (which roughly is half of the round trip delay) and can thus calculate the (typically negative) delay of the uplink signal with respect to the start of the downlink sub-frame such that the uplink data signal arrives at the base station in a desired time interval. It will be appreciated that if the determination of the time delay is sufficiently precise, the mobile station does not have to transmit ranging data at all, but may start its transmission immediately with an uplink user data signal.

In one development, for calculating the delay correction value a time offset between the common trigger signal and the start of the transmission of the downlink sub-frame is taken into account. Typically, the base station starts the transmission of the downlink frame directly after reception of the trigger contained in the signal from the global positioning system. However, the base station may also transmit the downlink sub-frame with a predefined delay in respect to the trigger signal. The mobile station has to take this predefined time offset into account. The information about the time offset may be known to the mobile station beforehand, or it may be broadcast by the base station in the downlink sub-frame.

In a further variant, the method comprises: determining a time offset between the start of the downlink sub-frame and the start of a ranging area of a TDD uplink sub-frame, and calculating the delay correction value based on the time offset and on the propagation delay such that the ranging data is received in the base station at the start of the ranging area. With the knowledge of the round trip delay and additional information on the position of the allocation for the ranging area relative to the frame start, the mobile station can determine when it has to start the transmission of the uplink signal so that the ranging data arrives at the base station in the appropriate time interval, i.e. at the beginning of the ranging area. The value of the time offset may be known to the mobile station as it is pre-defined for a given type of TDD frame, it may be extracted from the received downlink signal, or broadcast from the base station.

In another development, the method further comprises: in the mobile station, determining a distance to the base station, and estimating a transmit power for the data signal and/or calculating a delay correction value for delaying the transmission of the data signal in dependence of the determined distance. Although the distance may be estimated based on the propagation delay, it is typically more advantageous to determine the distance based on information about the position of the base station. These coordinates may be broadcast to the mobile station via downlink e.g. by including them in the downstream sub-frame. As the mobile station can derive its own coordinates from the signal of the global positioning system, the distance between the base station and the mobile station can be determined, and, based on the determined distance, an estimate of the required delay correction value and transmission power may be performed. In particular, it may be advantageous to calculate the delay correction value based on the (shortest) distance instead of the propagation delay, because the latter may be caused by a far reflector and can vary fast, especially if the terminal is a mobile terminal. These fast delay variations can be handled by the so called cyclic prefix and require no timing adjustment. In addition to the distance, the estimate of the transmission power may also be based on a model which takes the path loss of the radio signal into account, the model in particular also taking the topography (buildings, mountains etc.) between the respective positions of the base station and of the mobile station into account.

In another variant, the global positioning system is chosen from the group consisting of: NAVSTAR-GPS, Galileo, and Glonass (*Globalnaja Nawigazionnaja Sputnikowaja Sistema*). It will be understood that the method described above may be performed using global positioning systems according to different standards.

A further aspect of the invention is implemented in a communications cell of the type described in the introduction, the mobile station being adapted to receive the signal from the global positioning system for synchronizing the transmission of the uplink data signal with the downlink sub-frame. Although it is known for the base stations of a WiMAX system to use signals from a global positioning system to synchronize their operation e.g. in multi cellular networks using single frequency network application, i.e. to synchronize the frame start of all base stations, the use of a global positioning system for synchronizing the mobile stations with the base station in the same communications cell is a novel concept. For the purpose of receiving the trigger signal, a GPS receiver has to be implemented in both the mobile station(s) and the base station.

In one embodiment, the mobile station comprises a propagation delay determining unit for determining a propagation delay between the common trigger signal and the reception of the start of the downlink sub-frame at the mobile station, and a delay correction value calculation unit for calculating a delay correction value for the delay of the transmission of the uplink data signal based on the determined propagation delay. The delay correction value may in particular be a negative delay, i.e. the start of the transmission of the uplink data signal may be performed before the entire downlink sub-frame is received in the mobile station.

In another embodiment, the delay correction value determining unit is adapted to determine a time offset between the start of the downlink sub-frame and the start of a ranging area of a TDD uplink sub-frame, and the delay correction value calculating unit is adapted to calculate the delay correction value based on the time offset and on the propagation delay such that the ranging data of the uplink data signal is received in the base station at the start of the ranging area. As has been described above, the time offset may be determined in different ways, in particular by extracting the required delay information from the downlink sub-frame. When the ranging data is received in the appropriate time interval of the uplink sub-frame, no gap between the ranging area and the subsequent user data area has to be reserved. Consequently, the amount of user data which can be transmitted in the uplink sub-frame and thus the uplink throughput can be increased.

In another embodiment, the mobile station comprises a transmit power estimating device for estimating an uplink transmit power of the ranging data depending on the distance between the base station and the mobile station. By at least roughly estimating the uplink transmit power, it is possible to avoid several iterations of the uplink transmit power adaptation, thus reducing the time duration of the ranging process.

Another aspect of the invention is implemented in a wireless communications system, in particular a WiMAX system, comprising at least one communications cell as described above. The wireless communications system may be equipped with a plurality of communications cells, the base stations of these cells being preferably synchronized by the common trigger signal from the global positioning system.

Yet another aspect of the invention is implemented in a Time Division Duplex, TDD, frame structure as described in the introduction, wherein the ranging area does not exceed a time interval reserved for ranging data in an uplink data signal transmitted from the mobile station to the base station. In the TDD frame structure described herein, no gap is reserved for taking the propagation delay between the mobile station and the base station into account, as it is assumed that the mobile stations are adapted to transmit the uplink signal so that the ranging data is received in the base station at the start of the ranging area. It will be understood that in practical applications, not all of the mobile stations of a communications cell may be equipped with a GPS receiver, such that from time to time (e.g. for every tenth TDD frame), a TDD frame structure with an uplink sub-frame comprising a gap may be used for enabling the "legacy" mobile stations to connect to the base station by using the "classical" ranging procedure as described hereinabove.

A further aspect of the invention is related to a computer program product comprising code means adapted to perform all the steps of the method as described above. The computer program product may be implemented in the mobile station in the form of a suitable software or hardware, in particular a field programmable gate array (FPGA) or an application-specific integrated circuit (ASIC).

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: shows a schematic diagram of an embodiment of a communications cell according to the invention,
- **Fig. 2**: shows a TDD frame used in the WiMAX standard for performing transmissions between a base station and a mobile station of a communications cell,
- **Figs. 3a-c**: show the transmission of an uplink data signal by three mobile stations having different distance from the base station,
- **Fig. 4**: shows the synchronization of uplink and downlink transmissions after a ranging process for the mobile station of Fig. 3c, and
- **Fig. 5**: shows the use of a common trigger signal for performing the synchronization of the uplink and downlink transmissions in the communications cell of Fig. 1.

### Detailed Description of Preferred Embodiments

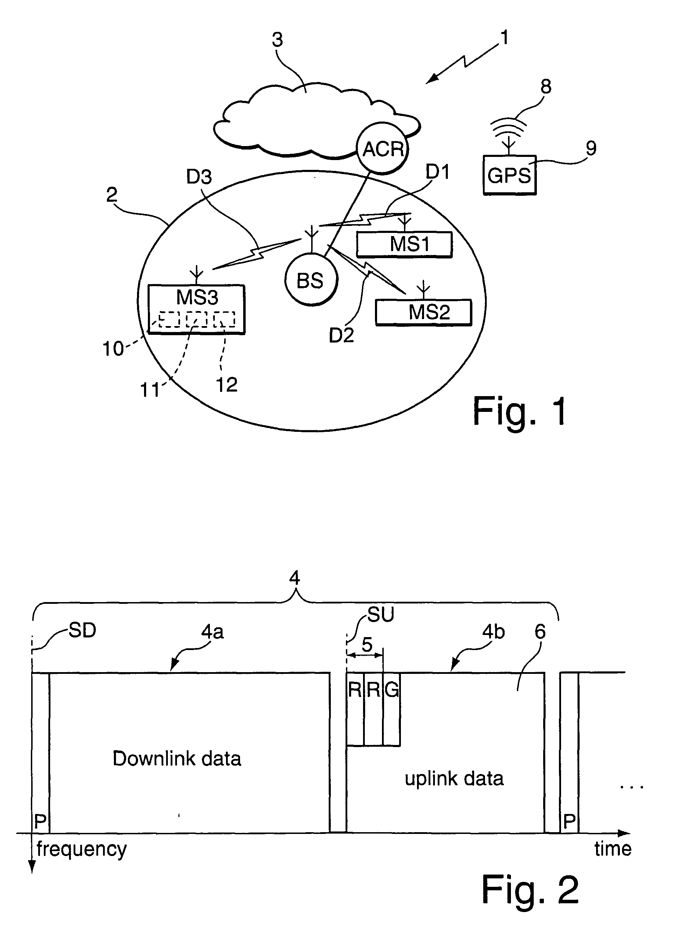

**Fig. 1** shows a communications cell **2** of a wireless network **1** according to the IEEE802.16 / WiMAX standard. The communications cell 2 comprises a base station **BS** and three mobile stations **MS1** to **MS3.** The base station BS is connected to a backbone network **3** via an Access Control Router **ACR.** Both the base station BS and the mobile stations MS1 to MS3 are equipped with antenna systems for transmitting and receiving radio signals, respectively.

Typically, when performing the exchange of signals between the base station BS and the mobile stations MS1 to MS3, a time- and frequency-dependent IEEE802.16e / WiMAX TDD frame **4** as shown in Fig. 2 is used. The TDD frame **4** contains a downlink sub-frame **4a** and an uplink sub-frame **4b,** each having a size which is an integer multiple of a time slot having a time duration of e.g. one OFDMA symbol length. At the start **SD** of the downlink sub-frame 4a, a preamble **P** is arranged which contains information which may be used for the ranging procedure as start of frame and will be described in greater detail below. The rest of the downlink sub-frame 4a is reserved for downlink data.

At the start **SU** of the uplink sub-frame 4b, a ranging area **5** for receiving ranging data **R** is provided. Between the ranging area 5 and an uplink user data area **6** a gap **G** is arranged to prevent the uplink ranging data R from overwriting uplink data located in the user data area 6. It will be understood that the time intervals reserved for the downlink and uplink sub-frames 4a, 4b in the TDD frame structure 4 may have a pre-set, fixed value, or may change from TDD frame to TDD frame, in the latter case the information about the time duration of the sub-frames **4a, 4b** being contained in the broadcast data by the base station BS.

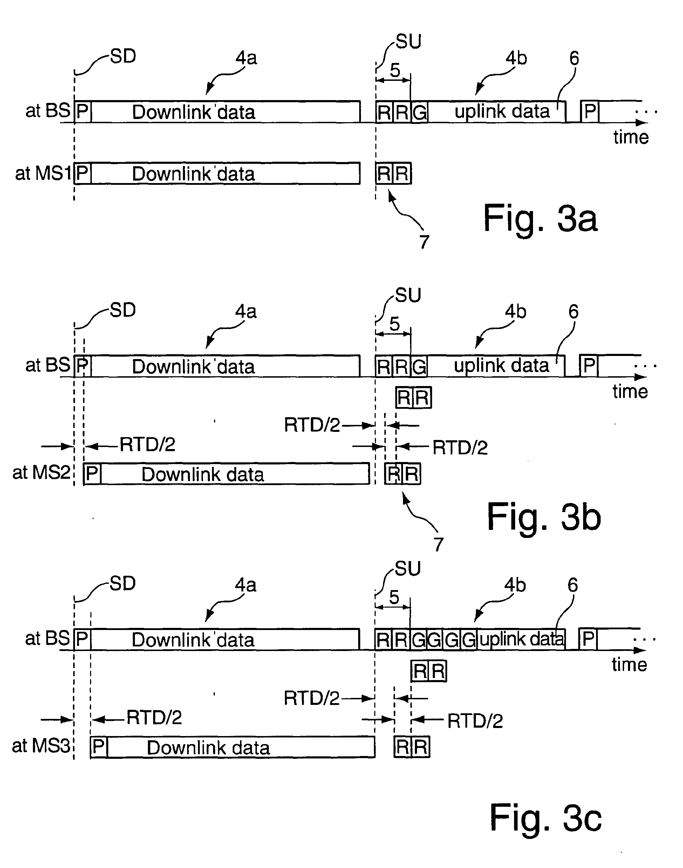

In the following, the ranging process according to the WiMAX standard will be shortly explained with respect to **Figs. 3a****-c,** showing the downlink and uplink sub-frames 4a, 4b at the base station BS and at three mobile stations MS1 to MS3, being located at three different distances **D1** to **D3** from the base station BS (cf. Fig. 1).

The mobile station MS1 of Fig. 3a is located close to the base station BS, such that virtually no propagation delay between the start of the transmission of the downlink sub-frame 4a in the base station BS and the reception thereof in the mobile station MS1 occurs. The mobile station MS1 knows from control messages in the downlink sub-frame 4a where the start SU of the uplink sub-frame 4b of the TDD frame 4 is located relative to the start SD of the received downlink sub-frame 4a. Thus, when starting the transmission of an uplink data signal 7 comprising ranging data R in the mobile station MS1 at a time instant which corresponds to the start SU of the uplink sub-frame 4b in the base station BS, the uplink signal 7 is immediately received in the base station BS, i.e. the ranging data R is received at the beginning of the ranging area 5.

In contrast thereto, in the case shown in Fig. 3b, the downlink sub-frame 4a of the WiMAX TDD frame 4 transmitted by the base station BS is received at the second mobile station MS2 with a propagation delay **RTD** / **2** which corresponds to the time interval required for the downlink sub-frame 4a to propagate from the base station BS to the second mobile station MS2. Thus, assuming equal propagation delays for the uplink and downlink transmission, the propagation delay of the uplink data signal 7 from the second mobile station MS2 to the base station BS will also be RTD / 2, such that the ranging data R will be received in the base station BS after the start SU of the uplink sub-frame 4b, the delay corresponding to the overall round trip delay RTD. Due to the delay, the ranging data R does not fit in the ranging area 5, such that the gap G has to be used for avoiding that the ranging data R overwrites data within the user data area 6.

The time interval which has to be reserved for the gap G depends on the maximal distance between the mobile stations MS1 to MS3 and the base station BS of the communications cell 2. As can be seen from Fig. 3c, showing the third mobile station MS3 which is located even farther away from the base station BS than the second mobile station MS2 shown in Fig. 3b, the propagation delay RTD / 2 and hence the overall round trip delay RTD is even larger in this case, such that an even larger gap G has to be provided between the ranging area 5 and the user data area 6.

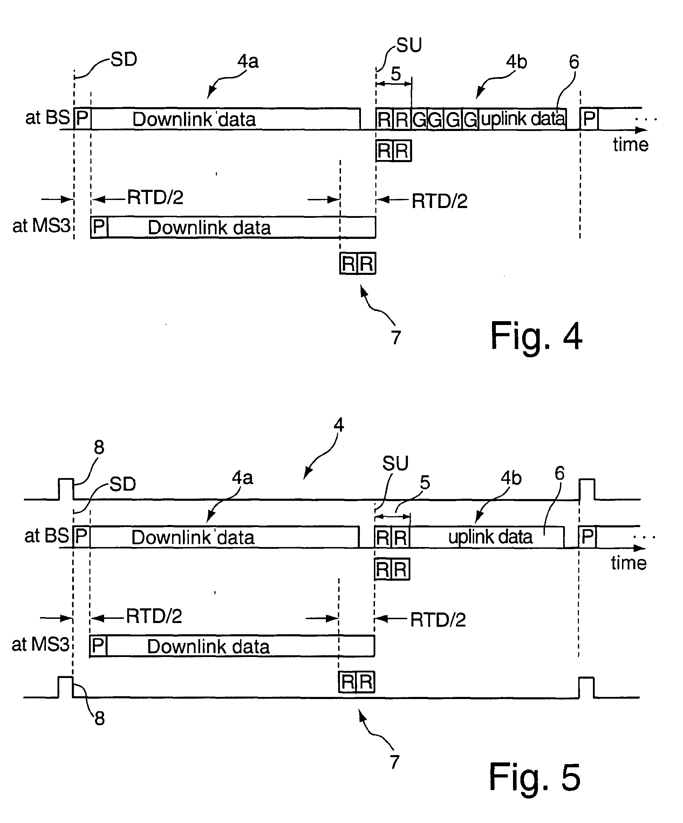

In the current IEEE802.16e and WiMAX standards, when performing the ranging procedure, the mobile stations MS1 to MS3 start transmitting the ranging data R with low transmit power and slowly increase the transmit power until the base station BS can decode the uplink signal 7 and respond with a control message which contains correction values for the transmit power and the transmit delay, respectively. After the third mobile station MS3 gets the delay correction value RTD, it delays its uplink transmit signal 7 by a negative delay corresponding to the delay correction value, so that the uplink signal 7 arrives at the base station BS in the desired initial ranging area 5, as is shown in **Fig. 4****.**

In a multi-cell environment, it is known for the base stations of a WiMAX system to use GPS signals to synchronize their operation, i.e. all the base stations start to transmit the downlink sub-frame 4 at the same time and also the uplink frame start SU is the same for all base stations.

In contrast thereto, in the following, a ranging procedure for the communications cell 2 of Fig. 1 will be described which is based on the reception of a signal **8** (cf. **Fig. 5****)** from a global positioning system **9** (cf. Fig. 1), e.g. NAVSTAR-GPS, the signal 8 being received in both the base station BS and the mobile stations MS1 to MS3 which are equipped each with a GPS receiver for this purpose.

When both the mobile stations MS1 to MS3 and the base station BS use the triggering information derived from the GPS signal 8 as a common trigger signal, each mobile station MS1 to MS3 can measure its individual propagation delay RTD / 2 between the common trigger signal 8 and the reception of the downlink sub-frame 4a by using a propagation delay determining unit **10** which is exemplarily shown for the third mobile station MS3 in Fig. 1. Based on the calculated propagation delay RTD / 2, the delay correction value RTD for the delay of the transmission of the uplink data signal 7 can be calculated in a delay correction value calculating unit **11** of the mobile station MS3, the latter only multiplying the propagation delay RTD / 2 by a factor of two and using the delay correction value RTD as a negative delay, cf. Fig. 5.

As has already been described above, the time offset between the start SD of the downlink sub-frame 4a and the start SU of the uplink sub-frame 4b is known to the mobile stations MS1 to MS3, and hence the delay correction value calculating unit 11 may subtract the delay correction value RTD from the time offset (SU - SD) to determine the appropriate start of the transmission of the uplink data signal 7 in the mobile station MS3 which allows the ranging data R to be received in the base station BS at the start SU of the uplink sub-frame 4b, i.e. in the ranging area 5.

Thus, when performing the synchronization of the uplink and downlink transmission in the mobile stations MS1 to MS3 in the way described above, the provision of a gap between the ranging area 5 and the user data area 6 in the TDD frame 4 of Fig. 5 may be dispensed with. Moreover, when the propagation delay RTD / 2 is known, a transmit power of the ranging data R may at least be roughly calculated / estimated in a transmit power estimating device **12** of the mobile stations MS1 to MS3 . The transmit power estimating device 12 may also take the distance D1 to D3 between the base station BS and the respective mobile station MS1 to MS3 into account for determining the path loss. For this purpose, the information about the GPS coordinates of the base station BS may be provided to the mobile station MS1 to MS3, for example in a control message from the base station BS. As the mobile stations MS1 to MS3 also have knowledge about their own coordinates owing to the GPS signal 8, their mutual distance D1 to D3 may be calculated. Moreover, when using topographic data and possibly weather data between the position of the base station BS and the position of the respective mobile station MS1 to MS3, a model for the path loss of the radio signals can be generated which allows one to refine the estimation of the required transmit power, thus avoiding several iterations in the transmit power adaptation. It will be understood that it is also possible to calculate the delay correction value RTD based on the determined distance D1 to D3 instead of the propagation delay. For this purpose, the correction value calculating unit 11 of the mobile station MS3 may be adapted accordingly. In this case, the trigger information derived from the GPS signal is not required for performing the synchronization.

Using the above mechanism, the time consuming initial ranging procedure as described in IEEE802.16e and WiMAX standards can be skipped, which means that no gap has to be reserved behind the ranging area 5 in the uplink sub-frame 4b and the saved frame resources can be used for traffic data instead, thus increasing the uplink throughput. Additionally, the time duration of the complete ranging process may be reduced. In particular, in the way described above, it may be possible to entirely dispense with the transmission of ranging data, such that the uplink data signal 7 may only transmit user data and the ranging area 5 of the uplink sub-frame 4b may also be dispensed with.

It will be appreciated that although in the above example, the transmission of the downlink sub-frame 4a directly follows the reception of the trigger signal 8 in the base station BS, when an offset is used between the common trigger signal 8 and the start of the transmission of the downlink sub-frame 4a, the delay correction value calculating unit 11 may be adapted to take such an offset into account. Furthermore, it will be understood that although the concepts described herein have been exemplified for a WiMAX system, these concepts may equally well be applied to other types of communications systems. Moreover, the synchronization between uplink and downlink transmissions is not limited to the TDD scheme described above and may also be applied for a FDD transmission scheme to synchronize the uplink signals from different mobile terminals. Although FDD uplink transmission frames do not comprise sub-frames, a ranging area is also required in this case, and the provision of a gap between the ranging area and an adjacent user data area may be avoided using the concepts described above.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

## Claims

1. Method for transmitting an uplink data signal (7), in particular comprising ranging data (R), from a mobile station (MS1 to MS3) to a base station (BS) of a communication cell (2) of a wireless communications system (1), in particular of a WiMAX system, the method comprising:
synchronizing the transmission of the uplink data signal (7) with the transmission of a downlink sub-frame (4a), in particular a Time Division Duplex, TDD, downlink sub-frame, transmitted from the base station (BS) to the mobile station (MS1 to MS3) by using a common signal, in particular a common trigger signal (8), of a global positioning system (9) which is received by both the base station (BS) and the mobile station (MS1 to MS3).

2. Method according to claim 1, further comprising:
in the mobile station (MS1 to MS3), determining a propagation delay (RTD / 2) between the common trigger signal (8) and the start of the reception of the downlink sub-frame (4a), and
calculating a delay correction value (RTD) for delaying the transmission of the uplink data signal (7) based on the determined propagation delay (RTD / 2).

3. Method according to claim 2, further comprising:
for calculating the delay correction value (RTD), taking a time offset between the common trigger signal (8) and the start (SD) of the downlink sub-frame (4a) into account.

4. Method according to claim 2, further comprising:
determining a time offset between the start (SD) of the downlink sub-frame (4a) and the start (SU) of a ranging area (5) of a TDD uplink sub-frame (4b), and
calculating the delay correction value (RTD) based on the time offset and on the propagation delay (RTD / 2) such that the ranging data (R) is received in the base station (BS) at the start (SU) of the ranging area (5).

5. Method according to claim 1, further comprising:
in the mobile station (MS1 to MS3), determining a distance (D1 to D3) to the base station (BS), and
estimating a transmit power for the data signal (7) and/or calculating a delay correction value (RTD) for delaying the transmission of the data signal (7) in dependence of the determined distance (D1 to D3).

6. Method according to claim 1, wherein the global positioning system (9) is chosen from the group consisting of: NAVSTAR-GPS, Galileo and Glonass.

7. Communications cell (2) for a wireless communications system (1), in particular a WiMAX system, comprising:
a base station (BS) adapted to receive a signal, in particular a trigger signal (8), from a global positioning system (9) for triggering the transmission of a downlink sub-frame (4a), in particular of a Time Division Duplex, TDD, downlink sub-frame, and
at least one mobile station (MS1 to MS3) adapted to transmit an uplink data signal (7) to the base station (BS), the uplink data signal (7) preferably comprising ranging data (R),
**characterized in that**
the mobile station (MS1 to MS3) is adapted to receive the signal (8) from the global positioning system (9) for synchronizing the transmission of the uplink data signal (7) with the transmission of the downlink sub-frame (4a).

8. Communications cell according to claim 7, wherein the mobile station (MS1 to MS3) comprises a propagation delay determining unit (10) for determining a propagation delay (RTD / 2) between the common trigger signal (8) and the reception of the downlink sub-frame (4a) at the mobile station (MS1 to MS3), and
a delay correction value calculating unit (11) for calculating a delay correction value (RTD) for the delay of the transmission of the uplink data signal (7) based on the calculated propagation delay (RTD / 2).

9. Communications cell according to claim 8, wherein the delay correction value calculating unit (11) is adapted to determine a time offset between the start (SD) of the downlink sub-frame (4a) and the start (SU) of a ranging area (5) of a TDD uplink sub-frame (4b), and wherein
the delay correction value calculating unit (11) is adapted to calculate the delay correction value (RTD) based on the time offset and the propagation delay (RTD / 2) such that the ranging data (R) of the uplink data signal (7) is received in the base station (BS) at the start (SU) of the ranging area (5).

10. Communications cell according to claim 7, wherein the mobile station (MS1 to MS3) comprises a transmit power estimating device (12) for estimating a transmit power of the ranging data (R) depending on the distance (D1 to D3) between the base station (BS) and the mobile station (MS1 to MS3).

11. Wireless communications system (1), in particular WiMAX system, comprising at least one communications cell (2) according to claim 7.

12. Time Division Duplex, TDD, frame structure (4) for a communications system (1), in particular a WiMAX system, comprising an uplink sub-frame (4b) to be transmitted from a mobile station (MS1 to MS3) to a base station (BS) of a communications cell (2), the uplink sub-frame (4b) comprising a ranging area (5) reserved for ranging data (R) and a subsequent user data area (6) reserved for user data,
**characterized in that**
the ranging area (5) does not exceed a time interval reserved for ranging data (R) in an uplink data signal (7) transmitted from the mobile station (MS1 to MS3) to the base station (BS).

13. Computer program product comprising code adapted to perform all the steps of the method according to claim 1.

## Amended claims

### Amended claims in accordance with Rule 137(2) EPC.

**1.** Method for transmitting an uplink data signal (7), in particular comprising ranging data (R), from a mobile station (MS1 to MS3) to a base station (BS) of a communications cell (2) of a wireless communications system (1), in particular of a WiMAX system, the method comprising:
synchronizing the transmission of the uplink data signal (7) with the transmission of a downlink sub-frame (4a), in particular a Time Division Duplex, TDD, downlink sub-frame, transmitted from the base station (BS) to the mobile station (MS1 to MS3) by using a common signal, in particular a common trigger signal (8), of a global positioning system (9) which is received by both the base station (BS) and the mobile station (MS1 to MS3).

**2.** Method according to claim 1, further comprising:
in the mobile station (MS1 to MS3), determining a propagation delay (RTD / 2) between the common trigger signal (8) and the start of the reception of the downlink sub-frame (4a), and
calculating a delay correction value (RTD) for delaying the transmission of the uplink data signal (7) based on the determined propagation delay (RTD/2).

**3.** Method according to claim 2, further comprising:
for calculating the delay correction value (RTD), taking a time offset between the common trigger signal (8) and the start (SD) of the downlink sub-frame (4a) into account.

**4.** Method according to claim 2, further comprising:
determining a time offset between the start (SD) of the downlink sub-frame (4a) and the start (SU) of a ranging area (5) of a TDD uplink sub-frame (4b), and
calculating the delay correction value (RTD) based on the time offset and on the propagation delay (RTD / 2) such that the ranging data (R) is received in the base station (BS) at the start (SU) of the ranging area (5).

**5.** Method according to claim 1, further comprising:
in the mobile station (MS1 to MS3), determining a distance (D1 to D3) to the base station (BS), and
estimating a transmit power for the data signal (7) and/or calculating a delay correction value (RTD) for delaying the transmission of the data signal (7) in dependence of the determined distance (D1 to D3).

**6.** Method according to claim 1, wherein the global positioning system (9) is chosen from the group consisting of: NAVSTAR-GPS, Galileo and Glonass.

**7.** Communications cell (2) for a wireless communications system (1), in particular a WiMAX system, comprising:
a base station (BS) adapted to receive a signal, in particular a trigger signal (8), from a global positioning system (9) for triggering the transmission of a downlink sub-frame (4a), in particular of a Time Division Duplex, TDD, downlink sub-frame, and
at least one mobile station (MS1 to MS3) adapted to transmit an uplink data signal (7) to the base station (BS), the uplink data signal (7) preferably comprising ranging data (R), wherein
the mobile station (MS1 to MS3) is adapted to receive the signal (8) from the global positioning system (9) for synchronizing the transmission of the uplink data signal (7) with the transmission of the downlink sub-frame (4a).

**8.** Communications cell according to claim 7, wherein the mobile station (MS1 to MS3) comprises a propagation delay determining unit (10) for determining a propagation delay (RTD / 2) between the common trigger signal (8) and the reception of the downlink sub-frame (4a) at the mobile station (MS1 to MS3), and
a delay correction value calculating unit (11) for calculating a delay correction value (RTD) for the delay of the transmission of the uplink data signal (7) based on the calculated propagation delay (RTD /2).

**9.** Communications cell according to claim 8, wherein the delay correction value calculating unit (11) is adapted to determine a time offset between the start (SD) of the downlink sub-frame (4a) and the start (SU) of a ranging area (5) of a TDD uplink sub-frame (4b), and wherein
the delay correction value calculating unit (11) is adapted to calculate the delay correction value (RTD) based on the time offset and the
propagation delay (RTD / 2) such that the ranging data (R) of the uplink data signal (7) is received in the base station (BS) at the start (SU) of the ranging area (5).

**10.** Communications cell according to claim 7, wherein the mobile station (MS1 to MS3) comprises a transmit power estimating device (12) for estimating a transmit power of the ranging data (R) depending on the distance (D1 to D3) between the base station (BS) and the mobile station (MS1 to MS3).

**11.** Communications cell according to claim 7, wherein the TDD downlink sub-frame (4a) is comprised in a Time Division Duplex, TDD, frame structure (4) which also comprises an uplink sub-frame (4b) to be transmitted from the mobile station (MS1 to MS3) to the base station (BS) of the communications cell (2), the uplink sub-frame (4b) comprising a ranging area (5) reserved for ranging data (R) and a subsequent user data area (6) reserved for user data, wherein the ranging area (5) does not exceed a time interval reserved for ranging data (R) in an uplink data signal (7) transmitted from the mobile station (MS1 to MS3) to the base station (BS).

**12.** Wireless communications system (1), in particular WiMAX system, comprising at least one communications cell (2) according to claim 7.

**13.** Computer program product comprising code adapted to perform all the steps of the method according to claim 1.
